# EUROPÄISCHE PATENTANMELDUNG

(11) **EP 3 054 562 A1**
(43) Veröffentlichungstag der Anmeldung: **10.08.2016**
(21) Anmeldenummer: 15154265.1
(22) Anmeldetag: 09.02.2015
(51) Int. Cl.: H02K 1/24, H02K 7/08, H02K 19/10, H02K 41/06, H02K 21/02

(54) **Elektrische Antriebsmaschine**

(71) Anmelder: Siemens Aktiengesellschaft, 80333 München (DE)
(72) Erfinder: Buhl, Michael Bernhard Dr., 85567 Grafing (DE); Feiten, Wendelin Dr., 85579 Neubiberg (DE)

(57) **Zusammenfassung**

Die Erfindung betrifft eine elektrische Antriebsmaschine, umfassend einen Läufer (10) mit einer ersten Anzahl an ersten magnetisch leitfähigen Abschnitten (11), einen Ständer (20) mit einer zweiten Anzahl an zweiten magnetisch leitfähigen Abschnitten (21) sowie einen zwischen dem Läufer (10) und dem Ständer (20) gebildeten Luftspalt (30). In dem Luftspalt (30) sind abschnittsweise magnetisch leitfähige Elemente (40) angeordnet, welche im Betrieb der elektrischen Antriebsmaschine in dem Luftspalt (30) relativ zu dem Läufer (10) und dem Ständer (20) derart beweglich sind, dass eine Teilanzahl der magnetisch leitfähigen Elemente (40) zwischen einem der ersten magnetisch leitfähigen Abschnitte (11) des Läufers (10) und einem diesem gegenüberliegenden der zweiten magnetisch leitfähigen Abschnitte (21) des Ständers (20) zum Liegen kommt, wodurch der magnetische Widerstand zwischen dem ersten und dem zweiten magnetisch leitfähigen Abschnitt (11, 21) verringert ist.

## Beschreibung

Die Erfindung betrifft eine elektrische Antriebsmaschine mit einem Läufer, einem Ständer und einem zwischen dem Läufer und dem Ständer gebildeten Luftspalt.

Die Größe des magnetischen Luftspaltes zwischen einem magnetisch leitfähigen Pol des Läufers und einem gegenüberliegenden magnetisch leitfähigen Pol des Ständers in einer elektrischen Antriebsmaschine legt den magnetischen Widerstand in einem magnetischen Kreis fest. Je größer der Luftspalt ist, desto größer wird der magnetische Widerstand, wodurch bei ansonsten konstanten Parametern die elektrischen Eigenschaften, wie z.B. das erzeugbare Drehmoment der elektrischen Antriebsmaschine, negativ beeinflusst werden. Andererseits werden die elektrischen Eigenschaften, wie das Drehmoment der elektrischen Antriebsmaschine, umso größer, je kleiner der Luftspalt zwischen Läufer und Ständer ist. Man ist daher bei der Konstruktion sowie bei der Montage einer elektrischen Antriebsmaschine bestrebt, den Luftspalt so klein wie möglich zu halten.

Es ist Aufgabe der vorliegenden Erfindung, eine elektrische Antriebsmaschine anzugeben, bei der der magnetische Widerstand möglichst klein gehalten werden kann.

Diese Aufgabe wird gelöst durch eine elektrische Antriebsmaschine gemäß den Merkmalen des Patentanspruchs 1. Vorteilhafte Ausgestaltungen ergeben sich aus den abhängigen Patentansprüchen.

Zur Lösung der Aufgabe wird eine elektrische Antriebsmaschine vorgeschlagen, die einen Läufer, einen Ständer sowie einen zwischen dem Läufer und dem Ständer gebildeten Luftspalt aufweist. Der Läufer umfasst eine erste Anzahl an ersten magnetisch leitfähigen Abschnitten. Diese ersten magnetisch leitfähigen Abschnitte sind durch die Pole des Läufers gebildet. Der Ständer umfasst eine zweite Anzahl an zweiten magnetisch leitfähigen Abschnitten. Die zweiten magnetisch leitfähigen Abschnitte sind durch die Pole des Ständers gebildet. Die erste Anzahl an ersten magnetisch leitfähigen Abschnitten und die zweite Anzahl an zweiten magnetisch leitfähigen Abschnitten können gleich sein. Die erste Anzahl und die zweite Anzahl an ersten bzw. zweiten magnetisch leitfähigen Abschnitten können unterschiedlich sein.

Erfindungsgemäß sind in dem Luftspalt abschnittsweise magnetisch leitfähige Elemente angeordnet, welche im Betrieb der elektrischen Antriebsmaschine in dem Luftspalt relativ zu dem Läufer und dem Ständer derart beweglich sind, dass eine Teilanzahl der magnetisch leitfähigen Elemente zwischen einem ersten der magnetisch leitfähigen Abschnitte des Läufers und einem diesem gegenüberliegenden der zweiten magnetisch leitfähigen Abschnitte des Ständers zum Liegen kommt, wodurch der magnetische Widerstand zwischen dem ersten und dem zweiten magnetisch leitfähigen Abschnitt verringert ist, da der Luftspalt zumindest bereichsweise eliminiert ist.

Unter dem Begriff "im Betrieb der elektrischen Antriebsmaschine" ist eine rotatorische oder translatorische Bewegung des Läufers relativ zu dem Ständer durch entsprechend in der elektrischen Antriebsmaschine erzeugte Magnetfelder zu verstehen.

Dadurch, dass eine Teilanzahl der magnetisch leitfähigen Elemente zwischen einem der ersten magnetisch leitfähigen Abschnitte des Läufers und einem diesem gegenüberliegenden der zweiten magnetisch leitfähigen Abschnitte des Ständers zum Liegen kommt, kann das Magnetfeld durch die in dem Luftspalt liegende Teilanzahl der magnetisch leitfähigen Elemente geführt werden, so dass der Luftspalt im Bereich der gerade aktiven magnetisch leitfähigen Abschnitte des Läufers und des Ständers zumindest abschnittsweise 0 ist. Dadurch kann beispielsweise das Drehmoment der Antriebsmaschine, bei ansonsten konstanten Parametern, gegenüber einer herkömmlichen Anordnung, bei der im Luftspalt zwischen gegenüberliegenden magnetisch leitfähigen Abschnitten von Läufer und Ständer kein magnetisch leitfähiges Material ist, vergrößert werden. Insbesondere kann das Drehmoment der elektrischen Antriebsmaschine bei gleicher Stärke eines Erregerstroms zur Erzeugung des Magnetfelds vergrößert werden. Durch das Vorhandensein der magnetisch leitfähigen Elemente in dem Luftspalt zwischen einem Pol des Ständers und einem Pol des Läufers, von denen einer zur Erzeugung eines Magnetfeldes durchflossen ist, reduzieren sich die Verluste und in der Folge auch die zur Kühlung notwendigen Maßnahmen.

In einer zweckmäßigen Ausgestaltung weist der Läufer eine glatte Lauffläche für die magnetisch leitfähigen Elemente auf, die dem Luftspalt zugewandt ist. Die glatte Lauffläche setzt sich aus den ersten magnetisch leitfähigen Abschnitten und ersten nicht magnetisch leitfähigen Abschnitten zusammen. Zwischen zwei ersten magnetisch leitfähigen Abschnitten ist jeweils ein erster nicht magnetisch leitfähiger Abschnitt angeordnet.

In einer weiteren Ausgestaltung ist vorgesehen, dass der Ständer eine glatte Lauffläche für die magnetisch leitfähigen Elemente aufweist, die dem Luftspalt zugeordnet ist, wobei sich die glatte Lauffläche aus den zweiten magnetisch leitfähigen Abschnitten und zweiten nicht magnetisch leitfähigen Abschnitten zusammensetzt, wobei zwischen zwei zweiten magnetisch leitfähigen Abschnitten jeweils ein zweiter nicht magnetisch leitfähiger Abschnitt angeordnet ist.

Die nicht magnetisch leitfähigen Abschnitte des Läufers und/oder des Ständers bestehen aus einem paramagnetischen Material, z.B. Aluminium. Die nicht magnetisch leitfähigen Abschnitte füllen Zwischenräume zwischen den magnetisch leitfähigen Abschnitten, d.h. Polen, des Läufers bzw. des Ständers aus, wobei durch deren Vorhandensein die glatte Lauffläche des Läufers bzw. Ständers erzielt wird. Dies macht es möglich, die magnetisch leitfähigen Elemente in dem Luftspalt derart anzuordnen, so dass diese im Betrieb der elektrischen Antriebsmaschine in dem Luftspalt relativ zu dem Läufer und dem Ständer beweglich sind.

Durch die Beweglichkeit der magnetisch leitfähigen Elemente in dem Luftspalt relativ zu dem Läufer und dem Ständer ist sichergestellt, dass bei jeweils gegenüberliegenden magnetisch leitfähigen Abschnitten des Läufers und des Ständers in erwünschter Weise eine Anzahl an magnetisch leitfähigen Elementen zwischen diesen angeordnet ist, während in anderen Abschnitten des Luftspalts durch die magnetisch leitfähigen Elemente kein magnetisch unerwünschter Kurzschluss zwischen einem ersten magnetisch leitfähigen Abschnitt des Läufers und einem zweiten magnetisch leitfähigen Abschnitt des Ständers hervorgerufen wird. Letzteres würde zu einem unerwünschten Verhalten der Maschine führen.

Die magnetisch leitfähigen Elemente können Kugeln, Walzen, Zahnräder oder elastische Körper mit hoher magnetischer Permeabilität sein. Für den Fall des Vorsehens von elastischen Körpers mit hoher magnetischer Permeabilität können diese ebenfalls in Gestalt von Kugeln, Walzen oder Zahnrädern ausgebildet sein. Die Elastizität eines Körpers kann beispielsweise dadurch sichergestellt werden, dass ein Hohlraum im Inneren des Körpers vorgesehen ist. Dadurch kann beispielsweise nicht nur ein punkt- oder linienförmiger Kontakt zwischen einem ersten magnetisch leitfähigen Abschnitt des Läufers und einem gegenüberliegenden zweiten magnetisch leitfähigen Abschnitt des Ständers sichergestellt werden. Vielmehr ist es möglich, eine dazu vergrößerte Auflagefläche sicherzustellen, was die Reduktion des magnetischen Widerstands begünstigt.

Die magnetisch leitfähigen Elemente können beispielsweise aus einem Eisen, insbesondere einem Elektroblech, gefertigt sein. Grundsätzlich sind auch andere Materialien möglich, wobei am besten geeignete Materialien durch Versuch ausfindig gemacht werden können.

Die magnetisch leitfähigen Elemente, können, insbesondere regelmäßig, beabstandet zueinander angeordnet sein. Alternativ können die leitfähigen Elemente in mehreren Gruppen zu zumindest zwei leitfähigen Elementen angeordnet sein, wobei die Gruppen, insbesondere regelmäßig, beabstandet zueinander angeordnet sind.

Zwischen zwei magnetisch leitfähigen Elementen oder zwei Gruppen von leitfähigen Elementen kann ein magnetisch nicht leitfähiger Körper angeordnet sein. Der magnetisch nicht leitfähige Körper kann eine Kugel, eine Walze, ein Zahnrad oder ein elastischer Körper aus einem paramagnetischen Material, wie z.B. Aluminium, sein. Die magnetisch nicht leitfähigen Körper bewegen sich dabei synchron mit den magnetisch leitfähigen Körpern in den Luftspalt.

Die magnetisch leitfähigen Elemente können gemäß einer weiteren Ausgestaltung kraftschlüssig mit dem Läufer und dem Ständer verbunden sein, wodurch im Betrieb der Antriebsmaschine eine Kraft auf den Läufer übertragbar ist, um den Läufer indirekt anzutreiben. Dabei übernehmen die magnetisch leitfähigen Körper beispielsweise die Funktion von Polen des Läufers. Durch die kraftschlüssige Übertragung sind die magnetisch leitfähigen Körper dann in der Lage, den Läufer bei geeigneten äußeren Magnetfeldern anzutreiben.

Gemäß einer weiteren zweckmäßigen Ausgestaltung sind die ersten bzw. zweiten magnetisch leitfähigen Abschnitte Pole des Läufers bzw. Ständers, wobei jeweilige Zwischenräume zwischen den ersten bzw. zweiten magnetisch leitfähigen Abschnitten mit magnetisch nicht leitfähigem Material zur Ausbildung der ersten bzw. zweiten magnetisch nicht leitfähigen Abschnitte aufgefüllt sind. Wie oben beschrieben, ermöglicht das Auffüllen mit magnetisch nicht leitfähigem Material zwischen zwei benachbarten Polen die Bereitstellung glatter Laufflächen, zwischen denen sich die magnetisch leitfähigen Körper mit möglichst geringem mechanischem Widerstand oder Kraftschluss bewegen können.

Die elektrische Antriebsmaschine kann eine rotierende Maschine oder ein Linearmotor sein.

Die elektrische Antriebsmaschine kann ein Reluktanzmotor oder eine Synchronmaschine oder eine Asynchronmaschine sein.

Die Erfindung wird nachfolgend näher anhand von Ausführungsbeispielen in der Zeichnung erläutert. Es zeigen:
- Fig. 1: eine schematische Darstellung, die das der elektrischen Antriebsmaschine zugrundeliegende Prinzip verdeutlicht, wobei ein Querschnitt der Antriebsmaschine gezeigt ist,
- Fig. 2: eine schematische Darstellung eines aus dem Stand der Technik bekannten Reluktanzmotors in einem Querschnitt,
- Fig. 3: ein erstes Ausführungsbeispiel einer erfindungsgemäßen elektrischen Antriebsmaschine, basierend auf dem in Fig. 2 gezeigten Reluktanzmotor,
- Fig. 4: ein zweites Ausführungsbeispiel einer erfindungsgemäßen elektrischen Antriebsmaschine, bei der ein Läufer in einer Nut eines U-förmigen Ständers beweglich angeordnet ist,
- Fig. 5: eine schematische Darstellung des Läufers der elektrischen Antriebsmaschine aus Fig. 4 in einer Draufsicht,
- Fig. 6: ein drittes Ausführungsbeispiel einer erfindungsgemäßen elektrischen Antriebsmaschine, bei der magnetisch leitfähige Elemente als Kette um den Läufer der elektrischen Antriebsmaschine verlaufen, und
- Fig. 7: ein viertes Ausführungsbeispiel einer erfindungsgemäßen elektrischen Antriebsmaschine, bei der durch magnetisch leitfähige Elemente eine Kraftübertragung auf den Läufer der Antriebsmaschine erfolgt.

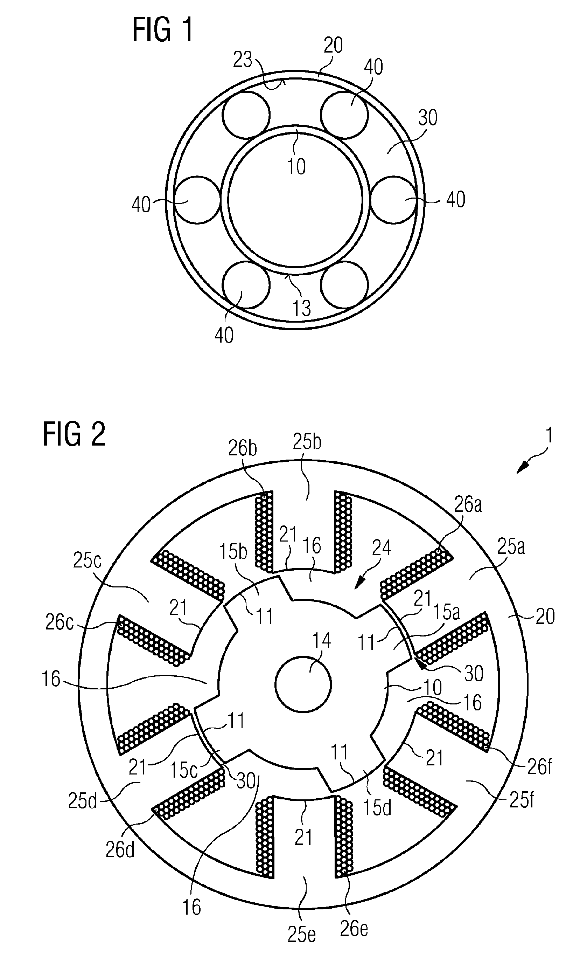

Fig. 1 zeigt eine Prinzipdarstellung einer erfindungsgemäßen elektrischen Antriebsmaschine. Die Antriebsmaschine ist als rotierende Maschine ausgebildet. Grundsätzlich kann das nachfolgend beschriebene Prinzip jedoch auch auf einen Linearmotor angewendet werden.

Die Antriebsmaschine hat einen im Ausführungsbeispiel kreisrunden Läufer 10, der eine nicht näher dargestellte erste Anzahl an ersten magnetisch leitfähigen Abschnitten umfasst. Die ersten magnetisch leitfähigen Abschnitte stellen Pole des Läufers 10, der einen Rotor bildet, dar. Umgeben ist der Läufer 10 von einem ebenfalls kreisrunden Ständer 20, dem Stator. Dieser weist eine ebenfalls nicht näher dargestellte zweite Anzahl an zweiten magnetisch leitfähigen Abschnitten auf. Die zweiten magnetisch leitfähigen Abschnitte stellen Pole des Ständers 20 dar. Zwischen dem Läufer 10 und dem Ständer 20 ist ein Luftspalt 30 gebildet.

Der Läufer 10 weist eine glatte Lauffläche 13 auf, die sich aus den ersten magnetisch leitfähigen Abschnitten und zwischen diesen angeordneten nicht näher dargestellten nicht magnetisch leitfähigen Abschnitten zusammensetzt. Mit anderen Worten ist zwischen zwei ersten magnetisch leitfähigen Abschnitten jeweils ein erster nicht magnetisch leitfähiger Abschnitt angeordnet. Die nicht magnetisch leitfähigen Abschnitte bestehen aus einem paramagnetischen Material, wie z.B. Aluminium.

In entsprechender Weise weist der Ständer 20 eine dem Luftspalt zugewandte glatte Lauffläche 23 auf, wobei sich die glatte Lauffläche 23 aus den zweiten magnetisch leitfähigen Abschnitten, d.h. den Polen, und zweiten nicht magnetisch leitfähigen Abschnitten (nicht dargestellt) zusammensetzt. Wie beim Läufer 10 sind die nicht magnetisch leitfähigen Abschnitte aus einem paramagnetischen Material, wie z.B. Aluminium gebildet. Die glatte Lauffläche 23 wird somit dadurch gebildet, dass zwischen zwei zweiten magnetisch leitfähigen Abschnitten (den Polen) jeweils ein zweiter nicht magnetisch leitfähiger Abschnitt angeordnet ist.

In dem Luftspalt 30 ist eine Anzahl an magnetisch leitfähigen Elementen 40 angeordnet. Im Ausführungsbeispiel sind die magnetisch leitfähigen Elemente 40 als Kugeln oder Walzen dargestellt. Die magnetisch leitfähigen Elemente können jedoch auch Zahnräder oder elastische Körper aus einem Material mit einer hohen magnetischen Permeabilität sein. Sind die magnetisch leitfähigen Elemente als Zahnräder ausgeführt, so werden die Laufflächen 13, 23 des Läufers 10 und des Ständers 20 nicht glatt, sondern angepasst an die Zahnform der Zahnräder ausgeführt. Die Kugeln oder Walzen oder Zahnräder oder elastische Körper können innen hohl, und optional mit einer magnetisch leitenden Flüssigkeit gefüllt oder aus vollem Material gebildet sein. Als Material für die magnetisch leitfähigen Elemente kommt beispielsweise ein Metall, wie z.B. Elektroblech, in Frage.

Die Form der magnetisch leitfähigen Elemente 40 ist dergestalt, dass diese widerstandsarm relativ zu dem Läufer 10 und dem Ständer 20 beweglich sind. Eine Bewegung der magnetisch leitfähigen Elemente 40 erfolgt dann, wenn durch entsprechende magnetische Felder (nicht dargestellt) der Läufer 10 in Bewegung versetzt wird. Die magnetisch leitfähigen Elemente 40 rotieren dann in vorgegebener Weise mit dem Läufer 10 mit. Die Anzahl und der Abstand zwischen den einzelnen magnetisch leitfähigen Elementen 40 sind dabei derart bemessen, dass eine Teilanzahl der magnetisch leitfähigen Elemente 40 zwischen dem über dem Luftspalt 30 gegenüberliegenden, ersten und zweiten magnetisch leitfähigen Abschnitten des Läufers 10 und des Ständers 20 zum Liegen kommt. Da die gerade gegenüberliegenden magnetisch leitfähigen Abschnitte des Läufers 10 und des Ständers 20, d.h. deren Pole, gerade aktiv dazu beitragen, ein Drehmoment von dem Ständer 20 auf den Läufer 10 zu erzeugen, wird der magnetische Widerstand zwischen den gegenüberliegenden magnetisch leitfähigen Abschnitten verringert. Bei ansonsten konstanten Parametern der elektrischen Antriebsmaschine 10 ist es so möglich, das auf den Rotor 10 übertragbare Drehmoment zu vergrößern.

Die magnetisch leitfähigen Elemente 40 werden derart in dem Luftspalt 30 angeordnet, dass diese den Luftspalt zwischen den aktiven gegenüberliegenden magnetisch leitfähigen Abschnitten (Polen) des Läufers 10 und des Ständers 20 möglichst vollständig ausfüllen, jedoch keinen magnetischen Kurzschluss zu solchen magnetisch leitfähigen Elementen 40 aufweisen, welche gerade nicht an der Drehmomenterzeugung beteiligt sind. Zu diesem Zweck können die magnetisch leitfähigen Elemente 40 einzeln, insbesondere regelmäßig, beanstandet zueinander angeordnet sein. Alternativ können die magnetisch leitfähigen Elemente 40 in mehreren Gruppen zu zumindest zwei leitfähigen Elementen angeordnet sein, wobei die Gruppen, insbesondere regelmäßig, beabstandet zueinander angeordnet sind. Die Anzahl der magnetisch leitfähigen Elemente einer Gruppe ist derart bemessen, dass dann, wenn die magnetisch leitfähigen Elemente 40 einer Gruppe zwischen einander gegenüberliegenden magnetisch leitfähigen Abschnitten (Polen) des Läufers 10 und des Ständers 20 liegen, den Luftspalt zwischen den gegenüberliegenden magnetisch leitfähigen Abschnitten, die an der Drehmomenterzeugung beteiligt sind, möglichst vollständig ausfüllen. Es versteht sich, dass die zu einer Gruppe gehörigen magnetisch leitfähigen Elemente nicht beabstandet zueinander angeordnet sein brauchen oder sollten.

Werden als magnetisch leitfähige Elemente 40 Kugeln eingesetzt, so besteht ein punktförmiger Kontakt zu der Lauffläche 13 des Läufers 10 und der Lauffläche 23 des Ständers 20. Ein größerer Flächenkontakt zu den Laufflächen 13, 23 des Läufers 10 und des Ständers 20 und damit ein größerer Füllgrad des Luftspalts mit magnetisch leitfähigem Material kann durch Ausgestaltung der magnetisch leitfähigen Elemente als Walzen hergestellt werden. Hier ist ein jeweils linienförmiger Kontakt möglich. Um die Kontaktfläche und den Füllgrad weiter zu erhöhen und damit den magnetischen Widerstand bestmöglich zu verringern, können die magnetisch leitfähigen Elemente als elastische Körper aus einem Material mit hoher magnetischer Permeabilität gebildet sein. Solche elastischen Körper können beispielsweise einen Hohlraum aufweisen, durch den die Elastizität der Körper sichergestellt wird.

In den nachfolgenden Ausführungsbeispielen werden mögliche Realisierungsprinzipien einer erfindungsgemäßen elektrischen Antriebsmaschine beschrieben. Lediglich beispielhaft basieren diese Ausgestaltungsvarianten auf einem Reluktanzmotor oder in Fig. 2 in herkömmlicher Bauform im Querschnitt gezeigt ist.

Ein Reluktanzmotor ist eine Bauform eines Elektromotors, bei dem das Drehmoment in dem Läufer 10 ausschließlich durch eine Reluktanzkraft erzeugt wird. Dies bedeutet, dass ein Reluktanzmotor weder mit Permanentmagneten bestückt ist noch sich an dem Läufer elektrische Wicklungen befinden. Dadurch entfallen prinzipbedingt jede Art von verschleißanfälligen Schleifringen und Bürsten. Der Läufer besitzt ausgeprägte Pole und besteht aus einem hochpermeablen, weichmagnetischen Material, wie beispielsweise Elektroblech.

Der Läufer 10 weist vier gleichförmig über den Außenumfang verteilte erste magnetisch leitfähige Abschnitte 11 in Gestalt von Vorsprüngen 15a, ..., 15d auf, die dem Luftspalt 30 zugewandt sind. Ein zwischen jeweils benachbarten Vorsprüngen 15a, ..., 15d bzw. Polen gebildeter Zwischenraum 16 (Nut) ist frei von jeglichem Material. Der Läufer 20 weist beispielhaft sechs Pole 25a, ..., 25f auf, welche jeweils von einer Wicklung 26a, ..., 26f umgeben sind. Die dem Luftspalt 30 zugewandten Fläche der Pole 25a, ..., 25f bilden die zweiten magnetisch leitfähigen Abschnitte.

Die Anordnung und Anzahl der Pole des Läufers 10 und des Ständers 20 sind derart bemessen, dass zu einem gegebenen Zeitpunkt immer nur zwei der Pole des Läufers 10 (im Ausführungsbeispiel die Pole 15a und 15c) Polen des Ständers 20 (im Ausführungsbeispiel die Pole 25a, 25d) gegenüberliegen können. Lediglich diese Polpaare sind zu diesem gegebenen Zeitpunkt in der Lage, zur Erzeugung eines Drehmoments beizutragen.

Die Bewegung des Rotors 10 kommt dadurch zustande, dass die Antriebsmaschine 1 nach minimalem magnetischem Widerstand (Reluktanz) strebt. Durch die Reluktanzkraft wird ein loser Pol die Stellung anstreben, in dem die Reluktanz ihr Minimum erreicht, d.h. die Induktivität ihr Maximum erreicht. Im Reluktanzmotor bilden immer zwei Pole des Ständers (Stator 20, im Ausführungsbeispiel die Pole 25a, ..., 25d) und zwei Pole des Läufers 10 (Rotor, im Ausführungsbeispiel die Pole 15a, 15c) einen "Ring", in dem sich der Läufer 10 so stellt, dass die Reluktanz möglichst gering wird.

Ein Vorteil dieser Antriebsmaschine ist der Umstand, dass Verluste praktisch nur im ruhenden und somit von außen gut kühlbaren Ständer 20 entstehen. Durch den vergleichsweise einfachen Aufbau des Läufers 10 ohne Spulen und spezielle Werkstoffe (es werden keine Dauermagnete und keine Materialien wie seltene Erden benötigt) kann der Läufer 10 robust und bei entsprechender Konstruktion tolerant gegenüber Drehzahlschwankungen ausgeführt werden.

Bei einem wie in Fig. 2 gezeigten Reluktanzmotor ist man bestrebt, den Luftspalt 30, der in der Fig. 2 gezeigten Stellung zwischen dem Pol 15a des Läufers 10 und dem Pol 25a des Ständers 20 sowie dem Pol 15c des Läufers 10 und dem Pol 25d des Ständers 20 gebildet ist, so gering wie möglich zu halten, um das Drehmoment zu maximieren.

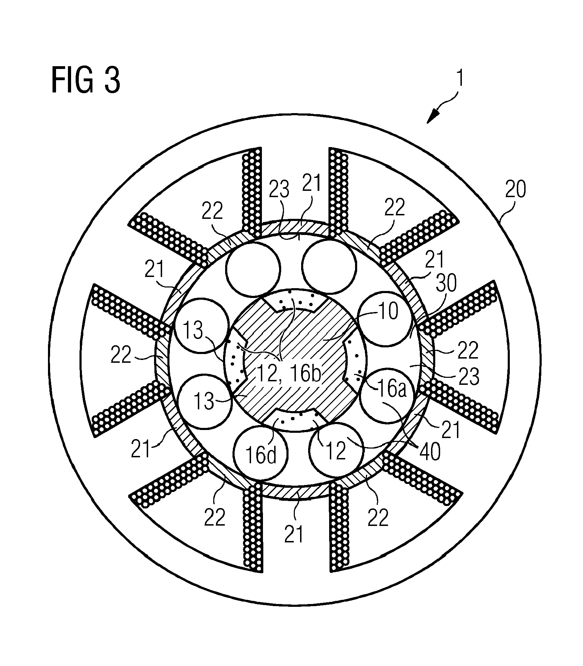

Demgegenüber zeigt Fig. 3 eine Modifikation des Reluktanzmotors aus Fig. 2 in erfindungsgemäßer Weise. Wie ohne weiteres ersichtlich ist, sind die Nuten 16a, ..., 16d mit einem nicht magnetisch leitfähigen Material, z.B. Aluminium, aufgefüllt. Diese Materialauffüllungen bilden mit ihrer dem Luftspalt 30 zugewandten Fläche die ersten, nicht magnetisch leitfähigen Abschnitte 12. Im Ergebnis wird dadurch die eingangs beschriebene kreisrunde Lauffläche 13 des Läufers 10 erreicht. In entsprechender Weise sind die Zwischenräume 24 zwischen den jeweiligen Polen 25a, ..., 25f ebenfalls mit einem paramagnetischen Material aufgefüllt und bilden mit ihrer dem Luftspalt 30 zugewandten Flächen die zweiten nicht magnetisch leitfähigen Abschnitte 22. In Verbindung mit den dem Zwischenraum 30 zugewandten Flächenabschnitten der Pole 25a, ..., 25f ergibt sich die ebenfalls kreisrunde Lauffläche 23 des Ständers 20. Da die Laufflächen 13, 23 des Läufers 10 und des Ständers 20 um die gleiche Achse rotieren, ergibt sich ein Luftspalt 30 konstanter Breite (d.h. Länge in radialer Richtung). Wie bereits beschrieben, sind in dem Luftspalt 30 die magnetisch leitfähigen Elemente 40 angeordnet. Dabei füllen die magnetisch leitfähigen Elemente aus hochpermeablem, weichmagnetischem Material den Luftspalt zwischen den einander gegenüberliegenden Polen der elektrischen Antriebsmaschine 1 und sorgen für eine Reduktion des magnetischen Widerstands.

Die Kraftübertragung auf den Läufer 10 erfolgt im Ausführungsbeispiel gemäß Fig. 3 direkt durch das in dem Läufer 10 erzeugte Magnetfeld. Insofern bestehen keine Anforderungen an einen Kraftschluss zwischen den magnetisch leitfähigen Elementen 40 und den Laufflächen 13, 23 des Läufers 10 und des Ständers 20, an welche sie grenzen. Die magnetisch leitfähigen Elemente 40 sind umlaufend in dem Luftspalt 30 angeordnet, wobei diese, wie oben beschrieben, entweder einzeln und dann beabstandet zueinander, oder in Gruppen angeordnet sind, wobei die einzelnen magnetisch leitfähigen Elemente einer Gruppe sich berühren können, die magnetisch leitfähigen Elemente 40 unterschiedlicher Gruppen jedoch einen Abstand zueinander aufweisen.

Der Abstand zwischen magnetisch leitfähigen Elementen 40 oder Gruppen von magnetisch leitfähigen Elementen 40 kann beispielsweise durch das Vorsehen entsprechend ausgebildeter Elemente sichergestellt werden, welche in Gestalt von Kugeln, Walzen, Zahnrädern oder elastischen Körpern vorgesehen sind und magnetisch nicht leitfähig sind.

Die magnetische Vorzugsrichtung ergibt sich nun durch die Lage des Läufers 10, so dass direkt ein Drehmoment erzeugt wird.

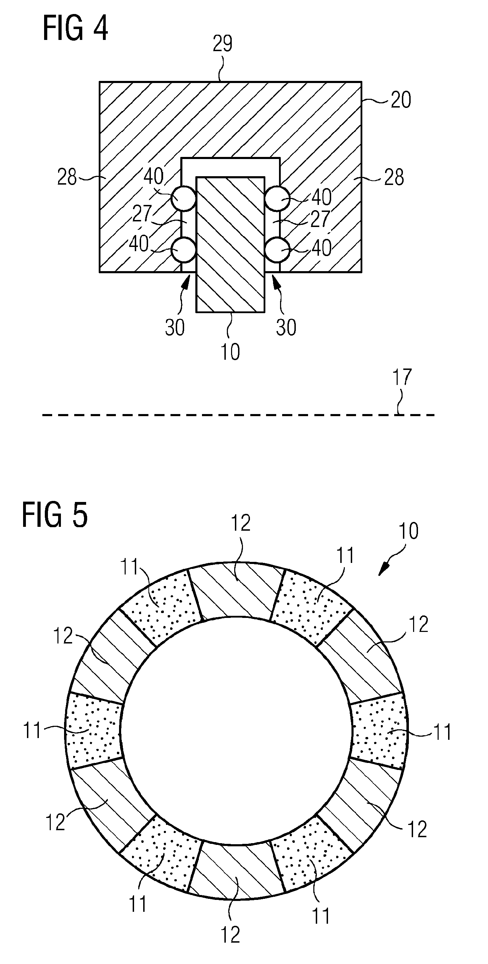

Die Figuren 4 und 5 zeigen eine alternative konstruktive Ausgestaltungsvariante des in Fig. 3 beschriebenen Antriebsprinzips. Fig. 4 zeigt dabei einen Teilschnitt durch die elektrische Antriebsmaschine. Fig. 5 zeigt eine Draufsicht auf einen Läufer 10. Der Ständer 20 weist im Schnitt, wie aus Fig. 4 ersichtlich ist, eine U-förmige Gestalt auf. In das Innere einer durch die U-Form des Ständers 20 gebildeten Nut ragt der Läufer 10, welcher um eine Rotationsachse 17 rotiert. Der Luftspalt 30 ist zwischen den Schenkeln 28 des Ständers 20 und den in axialer Richtung weisenden Flächenabschnitten des Rotors 10 gebildet. In dem Ausführungsbeispiel sind in jedem der Luftspalte 30 zwei magnetisch leitfähige Elemente 40 angeordnet. In jedem der Luftspalte 30 könnte auch eine davon abweichende Anzahl an magnetisch leitfähigen Elementen 40 angeordnet sein. Beispielsweise kann in jedem Luftspalt 30 lediglich ein einziges magnetisch leitfähiges Element 40 oder eine Anzahl größer als zwei angeordnet sein. Die magnetisch leitfähigen Elemente 40 in Gestalt von Kugeln werden beispielsweise durch nicht näher dargestellte Rillen in den Schenkeln 28 und den Laufflächen 13 des Läufers 10 gehalten.

Der Läufer 10 weist abwechselnd magnetisch leitfähige Abschnitte 11 und nicht magnetisch leitfähige Abschnitte 12 auf. Die Anzahl und Ausdehnung (d.h. die Größe der Winkelsegmente) der magnetisch leitfähigen Abschnitte 11 und der nicht magnetisch leitfähigen Abschnitte 12 ist lediglich qualitativ zu verstehen. Die tatsächlichen Größenverhältnisse sowie die tatsächlich gewählte Anzahl der Abschnitte kann entsprechend den Erfordernissen gewählt werden.

Bei dieser gezeigten Ausgestaltungsvariante werden die magnetischen Felder somit jeweils durch elektrische U-Magnete gebildet. Eine entsprechende Wicklung kann um den die Schenkel 28 verbindenden Querteil 29 gewickelt sein. Die Achse der Antriebsmaschine steht senkrecht auf der Ebene des Luftspaltes 30. Der Läufer 10 besteht am Rand aus Segmenten, welche abwechselnd ferro- und paramagnetisch sind. Zwischen diesen Segmenten 11, 12 und dem Ständer 20 laufen die magnetisch leitfähigen Elemente 40, z.B. ferromagnetische Kugeln, um den Luftspalt 30, wenn sich die magnetisch leitfähigen Abschnitte des Ständers 20 und des Läufers 10 gegenüberliegen, auf 0 zu reduzieren.

Fig. 5 zeigt ein weiteres Ausführungsbeispiel einer erfindungsgemäßen elektrischen Antriebsmaschine 1. Dabei wird der Luftspalt 30 zwischen dem Läufer 10 und dem Ständer 20 mit einer Vielzahl an Rollen (nicht einzeln ersichtlich) geschlossen. Diese Rollen sind zu einer Kette 43 verbunden. Die Kette umläuft die Kontur des Läufers 10, welche in etwa der Form eines "+" ähnelt. Die Kontur des Läufers 10 muss, damit die Kette 43 um den Rotor laufen kann, entsprechend abgerundete Kanten aufweisen. Um die Kette 43 an die Flächen des Läufers 10 zu pressen, sind paramagnetische Rollen 41 an dem Läufer 10 befestigt. Die paramagnetischen Rollen 41 rotieren mit der gleichen Winkelgeschwindigkeit wie der "+"-förmige Läufer 10. Die Dimensionierung der Kette 43, des Läufers 10 und des Ständers 20 ist dabei derart, dass die Rollen der Kette 43 den Luftspalt 30 schließen, wie dies für die Pole 25a und 25d des Ständers 20 dargestellt ist.

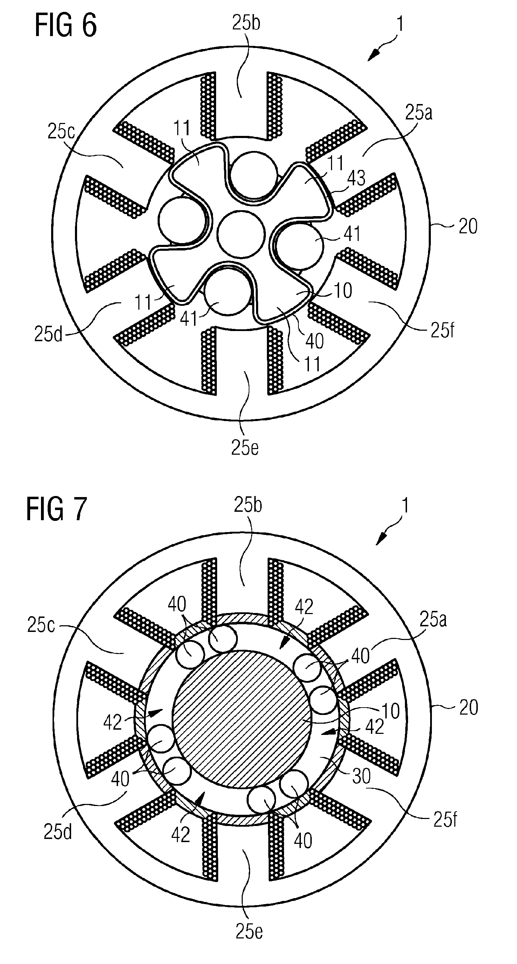

Fig. 7 zeigt ein Ausführungsbeispiel einer elektrischen Antriebsmaschine 1, bei der die magnetisch leitfähigen Elemente 40 kraftschlüssig zwischen dem Läufer 10 und dem Ständer 20 in dem Luftspalt 30 angeordnet sind. Im Ausführungsbeispiel bilden jeweils zwei magnetisch leitfähige Elemente 40 zu einer Gruppe, wobei eine jeweilige Gruppe die Funktion der in Fig. 2 mit 15a, ..., 15d gekennzeichneten Pole des Läufers 10 übernimmt. Dies bedeutet, die magnetisch leitfähigen Elemente 40 ersetzen die Pole 15a, ..., 15d aus dem Reluktanzmotor gemäß dem Stand der Technik. Die Zwischenräume zwischen den Gruppen von magnetisch leitfähigen Elementen können mit anderen Körpern, die keine magnetische Leitfähigkeit haben, aufgefüllt sein. Um eine möglichst gute kraftschlüssige Verbindung auf den kreisrunden Läufer, der hohl sein kann, sicherstellen zu können, ist es zweckmäßig, wenn die magnetisch leitfähigen Elemente leicht elastisch sind. Hierzu können die magnetisch leitfähigen Elemente hohl ausgebildet sein.

In den in den Fig. 3, 6 und 7 gezeigten Ausführungsbeispielen können die magnetisch leitfähigen Elemente 40 auch eine Lagerfunktion übernehmen. Je nach Auslegung ist es möglich, ein Lager des Läufers 10 vollständig zu ersetzen. Ebenso kann auch nur ein Teil der Lagerkräfte aufgenommen werden, wobei ein dann vorhandenes Lager des Läufers 10 verbleibende Kräfte aufnimmt.

## Patentansprüche

1. Elektrische Antriebsmaschine, umfassend einen Läufer (10) mit einer ersten Anzahl an ersten magnetisch leitfähigen Abschnitten (11), einen Ständer (20) mit einer zweiten Anzahl an zweiten magnetisch leitfähigen Abschnitten (21) sowie einen zwischen dem Läufer (10) und dem Ständer (20) gebildeten Luftspalt (30), wobei in dem Luftspalt (30) abschnittsweise magnetisch leitfähige Elemente (40) angeordnet sind, welche im Betrieb der elektrischen Antriebsmaschine in dem Luftspalt (30) relativ zu dem Läufer (10) und dem Ständer (20) derart beweglich sind, dass eine Teilanzahl der magnetisch leitfähigen Elemente (40) zwischen einem der ersten magnetisch leitfähigen Abschnitte (11) des Läufers (10) und einem diesem gegenüberliegenden der zweiten magnetisch leitfähigen Abschnitte (21) des Ständers (20) zum Liegen kommt, wodurch der magnetische Widerstand zwischen dem ersten und dem zweiten magnetisch leitfähigen Abschnitt (11, 21) verringert ist.

2. Antriebsmaschine nach Anspruch 1, bei der der Läufer (10) eine glatte Lauffläche (11) aufweist, die dem Luftspalt (30) zugewandt ist, wobei sich die glatte Lauffläche (13) aus den ersten magnetisch leitfähigen Abschnitten (11) und ersten nicht magnetisch leitfähigen Abschnitten (12) zusammensetzt, wobei zwischen zwei ersten magnetisch leitfähigen Abschnitten (11) jeweils ein erster nicht magnetisch leitfähiger Abschnitt (12) angeordnet ist.

3. Antriebsmaschine nach Anspruch 1 oder 2, bei der der Ständer (20) eine glatte Lauffläche (23) aufweist, die dem Luftspalt (30) zugewandt ist, wobei sich die glatte Lauffläche (23) aus den zweiten magnetisch leitfähigen Abschnitten (21) und zweiten nicht magnetisch leitfähigen Abschnitten (23) zusammensetzt, wobei zwischen zwei zweiten magnetisch leitfähigen Abschnitten (21) jeweils ein zweiter nicht magnetisch leitfähiger Abschnitt (22) angeordnet ist.

4. Antriebsmaschine nach einem der vorhergehenden Ansprüche, bei der die magnetisch leitfähigen Elemente (40) Kugeln, Walzen, Zahnräder oder elastische Körper mit hoher magnetischer Permeabilität sind.

5. Antriebsmaschine nach einem der Ansprüche 1 bis 4, bei der die magnetisch leitfähigen Elemente (40), insbesondere regelmäßig, beabstandet zueinander angeordnet sind.

6. Antriebsmaschine nach einem der Ansprüche 1 bis 4, bei der die magnetisch leitfähigen Elemente (40) in mehreren Gruppen zu zumindest zwei leitfähigen Elementen (40) angeordnet sind, wobei die Gruppen, insbesondere regelmäßig, beabstandet zueinander angeordnet sind.

7. Antriebsmaschine nach Anspruch 5 oder 6, bei der zwischen zwei magnetisch leitfähigen Elementen (40) oder zwischen zwei Gruppen von leitfähigen Elementen (40) ein magnetisch nicht leitfähiger Körper angeordnet ist.

8. Antriebsmaschine nach Anspruch 7, bei der der magnetisch nicht leitfähiger Körper eine Kugel, eine Walze, ein Zahnrad oder ein elastischer Körper ist.

9. Antriebsmaschine nach einem der vorhergehenden Ansprüche, bei der die magnetisch leitfähigen Elemente (40) kraftschlüssig mit dem Läufer (10) und dem Ständer (20) verbunden sind, wodurch im Betrieb der Antriebsmaschine eine Kraft auf den Läufer (10) übertragbar ist, um den Läufer (10) indirekt anzutreiben.

10. Antriebsmaschine nach einem der vorhergehenden Ansprüche, bei der die ersten bzw. zweiten magnetisch leitfähigen Abschnitte Pole des Läufers (10) bzw. Ständers (20) sind, wobei jeweilige Zwischenräume zwischen den ersten bzw. zweiten magnetisch leitfähigen Abschnitten mit magnetisch nicht leitfähigem Material zur Ausbildung der ersten bzw. zweiten nicht magnetisch leitfähigen Abschnitte aufgefüllt sind.

11. Antriebsmaschine nach einem der vorhergehenden Ansprüche, bei der die elektrische Antriebsmaschine eine rotierende Maschine oder ein Linearmotor ist.

12. Antriebsmaschine nach einem der vorhergehenden Ansprüche, bei der die elektrische Antriebsmaschine ein Reluktanzmotor oder eine Synchron- oder Asynchronmaschine ist.
